# EUROPÄISCHE PATENTSCHRIFT

(11) **EP 1 397 656 B1**
(45) Veröffentlichungstag und Bekanntmachung des Hinweises auf die Patenterteilung: **06.05.2009**
(21) Anmeldenummer: 02730292.6
(22) Anmeldetag: 10.06.2002
(51) Int. Cl.: G01L 27/00

(54) **VERFAHREN UND VORRICHTUNG ZUM TESTEN ODER KALIBRIEREN EINES DRUCKSENSORS AN EINEM WAFER**
METHOD AND DEVICE FOR TESTING OR CALIBRATING A PRESSURE SENSOR ON A WAFER
PROCEDE ET DISPOSITIF POUR ESSAYER OU ETALONNER UN CAPTEUR DE PRESSION FORME DANS UNE TRANCHE DE SILICIUM

(30) Priorität: 11.06.2001 DE 10128235
(43) Veröffentlichungstag der Anmeldung: 17.03.2004
(73) Patentinhaber: Fraunhofer-Gesellschaft zur Förderung der angewandten Forschung e.V., 80686 München (DE)
(72) Erfinder: KÖSTER, Oliver, 40723 Hilden (DE); SLOTKOWSKI, Johann, 58313 Herdecke (DE)
(74) Vertreter: Schoppe, Fritz
(86) Internationale Anmeldenummer: PCT/EP2002/006350
(87) Internationale Veröffentlichungsnummer: WO 2002/101348

(56) Entgegenhaltungen:
- EP-A- 1 114 988
- US-A- 4 567 432
- US-A- 4 777 716
- US-A- 4 825 684
- US-A- 5 421 956
- US-A- 5 528 214
- US-B1- 6 373 271
- PATENT ABSTRACTS OF JAPAN vol. 013, no. 531 (E-851), 28. November 1989 (1989-11-28) & JP 01 216550 A (NEC CORP), 30. August 1989 (1989-08-30)

## Beschreibung

Die vorliegende Erfindung bezieht sich auf ein Verfahren und eine Vorrichtung zum Testen oder Kalibrieren eines Drucksensors an einem Wafer.

Mikroelektronische Schaltungen, die in oder an einem Wafer gebildet wurden, werden gewöhnlich noch vor Vereinzelung des Wafers und Häusung der einzelnen Schaltungen getestet. Diese Tests werden durch automatische Waferprober bzw. Wafertester ausgeführt. Ein Waferprober umfaßt ein Handlingsystem bzw. eine Handhabungseinrichtung, welche einen einzelnen Wafer aus einer Aufbewahrungseinheit (Horde) entnimmt und dem eigentlichen Prober übergibt. Der Wafer wird auf eine verfahrbare Trägerplatte, den sogenannten Chuck gebracht und dort durch Ansaugen oder auch elektrostatisch oder mit Hilfe einer Klebeschicht arretiert. Der Prober nimmt eine exakte Positionierung des zu testenden Wafers in allen drei Raumrichtungen vor. Nach der erfolgten Positionierung des zu testenden Wafers kommt jeweils genau eine integrierte Schaltung des Wafers unterhalb einer unbeweglich angebrachten Probecard bzw. Nadelkarte zu liegen. Die Nadelkarte weist eine Mehrzahl von Wolframnadeln auf, deren Anordnung exakt der Geometrie der mikroskopischen Pads bzw. Kontaktstellen an der integrierten Schaltung entspricht. Zur Kontaktierung der integrierten Schaltung wird der Chuck in die Höhe bzw. in der zu der Waferebene senkrechten z-Richtung verfahren, bis die Nadeln der Nadelkarte auf den Pads aufsetzen und so elektrisch leitfähige Verbindungen zu denselben herstellen. Über makroskopische Abgriffe, die den Nadeln der Nadelkarte zugeordnet und mit diesen elektrisch leitfähig verbunden sind, werden elektrische Signale zu der integrierten Schaltung geleitet oder von der integrierten Schaltung erzeugte elektrische Signale abgegriffen.

Eine Nadelkarte kann jeweils eine oder mehrere integrierte Schaltungen gleichzeitig kontaktieren. Zur sequentiellen Kontaktierung und Testung aller integrierten Schaltungen wird der Wafer mit dem Chuck wiederholt um vorbestimmte Strecken parallel zu der Waferebene verfahren und an die Nadeln der Nadelkarte herangefahren. Da die genauen Positionen aller integrierten Schaltungen auf einem Wafer bekannt sind, reicht dabei eine einmalige Positionierung des Wafers aus. Der Waferprober ist über eine serielle Schnittstelle mit einem Computer bzw. einer Workstation eines Testsystems verbunden, so daß ein durch das Testsystem bzw. der Computer ausgeführtes Testprogramm mit dem Waferprober kommunizieren kann.

Sofern die integrierte Schaltung einen Drucksensor umfaßt, ist mittels des oben beschriebenen Waferprobers lediglich ein Test elektrische Funktionen und Funktionalitäten der integrierten Schalung möglich. Nach dem Test werden der Wafer vereinzelt und elektrisch funktionsfähige integrierte Schaltungen gehäust, d. h. in Gehäuse eingesetzt oder eingegossen. Anschließend erfolgt ein Test und gegebenenfalls eine Kalibrierung der vereinzelten und gehäusten Drucksensoren.

Diese Vorgehensweise hat den Nachteil, daß auch Drucksensoren, die defekt sind, gehäust werden, da ihr Defekt erst nach dem Vereinzeln und Häusen erkannt wird. Ferner ist das Testen der vereinzelten und gehäusten Drucksensoren aufwendig und teuer, da jeder einzelne Drucksensor gehandhabt, positioniert und kontaktiert werden muß. Kostengründe vereiteln deshalb eine Anwendung von Drucksensoren in einer Reihe von Produkten. Bei einigen von Produkten ist die beschriebene Kalibrierung nach dem Vereinzeln und Häusen aus technischen Gründen nicht durchführbar. Ein weiterer Nachteil besteht darin, daß zum Speichern bzw. Einprogrammieren von Kalibrierkoeffizienten bzw. Kalibrierparametern in den Drucksensor bzw. in die mit ihm integrierte Schaltung bzw. in ein integriertes Speicherelement (z. B. ein EEPROM) das Gehäuse gegebenenfalls einen oder mehrere zusätzliche Kontakte aufweisen muß, die nur einmal, nämlich beim Kalibrieren des Drucksensors, verwendet werden, jedoch die Herstellungskosten erhöhen und während der gesamten Lebensdauer des Drucksensors die Gefahr einer Beschädigung oder Zerstörung desselben erhöhen.

Das Dokument US-A-4 777 716 (L.E. Folk u.A.) offenbart ein Verfahren und eine Vorrichtung zum Testen eines mit Drucksensoren bestückten Wafers. Eine Platte ist mit einem Vakuumgehäuse, aus dem elektrische Kontaktnadeln hervorstehen, verbunden. Durch Anlegen dieser Platte an den mit einer Dichtlippe umgegebenen Wafer können einzelne Drucksensoren dieses Wafers kontaktiert und überprüft werden.

Die Aufgabe der vorliegenden Erfindung besteht darin, ein verbessertes Test- oder Kalibrier-Verfahren für einen Drucksensor, ein Herstellungsverfahren für einen Drucksensor und eine Vorrichtung zu schaffen, die ein Testen und ein Kalibrieren eines Drucksensors vereinfachen.

Diese Aufgabe wird durch ein Verfahren gemäß Anspruch 1, ein Verfahren gemäß Anspruch 12 und eine Vorrichtung gemäß Anspruch 14 gelöst.

Der vorliegenden Erfindung liegt die Idee zugrunde, Drucksensoren, insbesondere oberflächenmikromechanische Absolutdrucksensoren, und insbesondere für einen Unterdruckbereich vorgesehene Drucksensoren, noch in einem Wafer, d. h. vor dessen Vereinzelung, zu testen bzw. zu kalibrieren. Dazu wird ein druckempfindlicher Abschnitt des Drucksensors beispielsweise mittels einer Dichtlippe mit einer Fluidleitung verbunden, über die einer oder nacheinander mehrere vorbestimmten Drücke an den druckempfindlichen Abschnitt des Drucksensors angelegt werden können. Vorzugsweise wird gleichzeitig oder nach dem Anlegen eines Druckes ein durch den Drucksensor in Ansprache auf den Druck an einem Signalausgang erzeugtes Signal empfangen. Dazu wird der Test bzw. die Kalibrierung vorzugsweise mittels eines automatischen Wafertesters mit einer Nadelkarte durchgeführt, wobei zwischen der Nadelkarte und einer Oberfläche des Wafers, an der der druckempfindliche Abschnitt des Drucksensors angeordnet ist, die Dichtlippe angeordnet ist. Diese Dichtlippe umschließt den druckempfindlichen Abschnitt, die Nadeln der Nadelkarte und Pads bzw. Anschlußflächen des Drucksensors lateral beispielsweise in Form eines Kreises oder eines Rechtecks und dichtet den Zwischenraum zwischen der Oberfläche des Wafers einerseits und der Nadelkarte andererseits, in dem der druckempfindliche Abschnitt des Drucksensors angeordnet ist, druckdicht gegenüber der Umwelt ab. Vorzugsweise wird ein Standard-Wafertester modifiziert und insbesondere mit der Dichtlippe unter der Nadelkarte versehen.

Eine in herkömmlichen Nadelkarten häufig vorhandene Öffnung über den Nadelspitzen wird gegebenenfalls mittels eines Deckels druckdicht verschlossen, der vorzugsweise ein transparentes Material, beispielsweise PMMA (Polymethylmethacrylat) aufweist. Eine Fluidleitung verbindet den somit vollständig druckdicht umschlossenen Hohlraum zwischen der Oberfläche des Wafers, der Nadelkarte und dem Deckel mit einem Drucksystem, das den bzw. die vorbestimmten Drükke erzeugt.

Ein Vorteil der vorliegenden Erfindung besteht darin, daß die Drucksensoren noch auf dem nicht vereinzelten Wafer getestet oder kalibriert werden können. Dies kann gleichzeitig mit einem Test der elektrischen Eigenschaften der integrierten Schaltung bzw. ihrer Funktionsfähigkeit erfolgen. Eine erneute Handhabung, Positionierung und Kontaktierung der vereinzelten und gehäusten Drucksensoren ist nicht erforderlich. Defekte Drucksensoren werden nicht gehäust, da sie bereits davor identifiziert werden. Entsprechend der resultierenden Vereinfachung und Verkürzung des Herstellungsverfahrens im Bereich des Testens und Kalibrierens entstehen erhebliche Kostenvorteile, die einen Einsatz von integrierten Drucksensoren in vielen Produkten erst wirtschaftlich ermöglichen. Ferner ermöglicht die vorliegende Erfindung die Verwendung integrierter Drucksensoren in Produkten, bei denen eine Testung oder Kalibrierung nach dem Vereinzeln aus technischen Gründen nicht durchführbar ist. Der gehäuste Drucksensor bzw. sein Gehäuse muß ferner keine Kontakte zur Übertragung von Kalibrierkoeffizienten in ein integriertes Speicherelement (z. B. ein EEPROM) aufweisen. Deshalb können Größe und Herstellungskosten des Gehäuses reduziert und das Risiko einer späteren Beschädigung dieser Kontakte vermieden werden. Ein weiterer Vorteil der vorliegenden Erfindug ist ihre Implementierbarkeit durch eine Modifikation eines herkömmlichen Wafertesters. Die vorliegende Erfindung erzeugt deshalb nur geringe Investitionskosten.

Ein bevorzugtes Anwendungsgebiet der vorliegenden Erfindung ist die Fertigung von Absolutdrucksensoren besonders im Unterdruckbereich zwischen 0 und 1 bar und insbesondere von oberflächenmikromechanischen Absolutdrucksensoren, in hohen Stückzahlen und insbesondere für Einsatzgebiete, bei denen der Kunde nach Einbau des Absolutdrucksensors in sein Gesamtsystem keine Möglichkeit zur Kalibrierung des Sensors mehr hat.

Nachfolgend werden bevorzugte Ausführungsbeispiele der vorliegenden Erfindung anhand der beiliegenden Figuren näher erläutert. Es zeigen:
- Fig. 1: eine schematische Darstellung eines Drucksensortestsystems gemäß der vorliegenden Erfindung;
- Fig. 2: eine schematische Schnittdarstellung einer erfindungsgemäßen Vorrichtung;
- Fig. 3A und 3B: eine schematische Draufsicht auf einen Wafer und eine schematische Schnittdarstellung einer Dichtlippe gemäß der vorliegenden Erfindung; und
- Fig. 4A und 4B: eine schematische Draufsicht und eine schematische Schnittdarstellung eines Deckels gemäß der vorliegenden Erfindung.

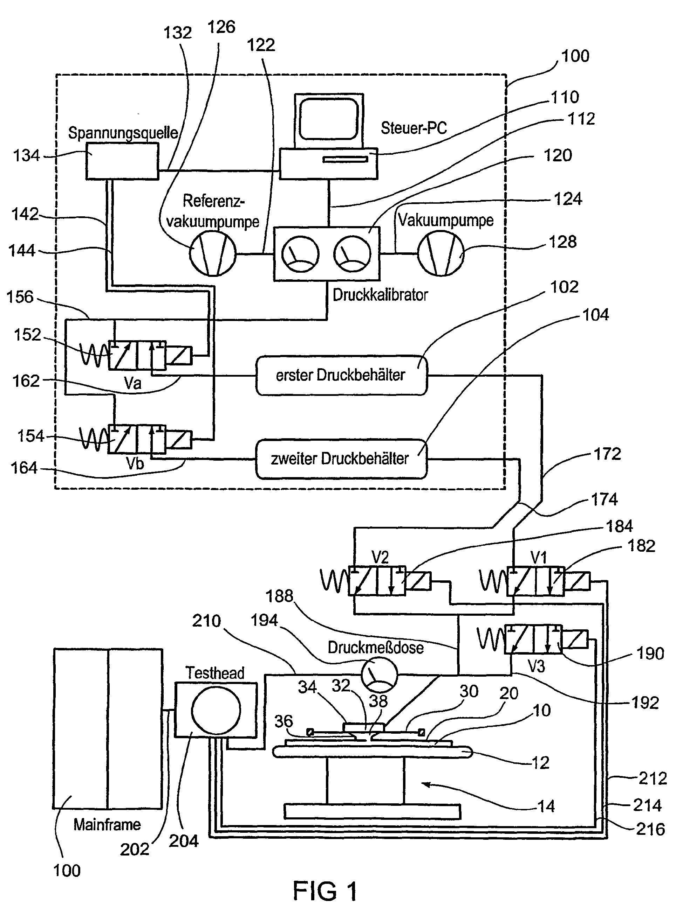

In Fig. 1 ist eine schematische Darstellung eines Testsystems gemäß einem bevorzugten Ausführungsbeispiel der vorliegenden Erfindung. Ein Wafer 10 wird von einem Waferträger bzw. Chuck 12 eines Probers 14 mittels Unterdruck, elektrostatisch oder mittels einer Klebeschicht gehalten und in allen drei Raumrichtungen positioniert. An einer Oberfläche 20 des Wafers 10 ist eine Mehrzahl nicht dargestellter Drucksensoren angeordnet, die vorzugsweise untereinander gleich aufgebaut und in einem regelmäßigen Raster angeordnet sind. Jeder Drucksensor umfaßt einen druckempfindlichen Abschnitt, einen mechanisch-elektrischen Wandler und einen Signalausgang.

Im Fall eines piezoelektrischen Drucksensors ist der mechanisch-elektrische Wandler ein einen Piezo-Effekt aufweisender Festkörper, beispielsweise ein piezoelektrischer Kristall mit einer Oberfläche, die den druckempfindlichen Abschnitt des Drucksensors darstellt.

Im Fall eines kapazitiven Drucksensors ist der mechanischelektrische Wandler ein Kondensator, dessen eine Kondensatorplatte eine durch Druck verformbare Membran ist, deren Oberfläche den druckempfindlichen Abschnitt des Drucksensors darstellt. Der Signalausgang des Drucksensors weist eine Mehrzahl von Kontaktflächen bzw. Pads auf, über die erforderlichenfalls dem Drucksensor eine elektrische Leistung, eine elektrische Spannung oder ein anderes elektrisches Signal zugeführt werden kann, und über die ein durch den Drucksensor erzeugtes oder beeinflußtes Signal abgegriffen werden kann.

Darüber hinaus kann jeder Drucksensor eine zwischen dem mechanisch-elektrischen Wandler und die Kontaktflächen geschaltete integrierte Schaltung zum Erzeugen, Aufbereiten oder Wandeln elektrische Signale aufweisen. Wenn der obenerwähnte kapazitive Drucksensor dafür vorgesehen ist, mit einer Gleichspannung versorgt zu werden, weist die integrierte Schaltung vorzugsweise einen auf einem Komparator basierenden Oszillator auf. Der die Membran umfassende Kondensator wird durch einen vorbestimmten Strom geladen, wobei der Komparator die Spannung an dem Kondensator mit einer Referenzspannung vergleicht. Sobald die Spannung an dem Kondensator die Referenzspannung erreicht, wird von dem Ladevorgang zu einem Entladevorgang umgeschaltet. Dieser Entladevorgang wird entweder gesteuert durch einen zweiten Komparator beim Unterschreiten einer zweiten Referenzspannung abgebrochen, oder aber es wird über einen Kurzschluß vollständig entladen. Lade- und Entladevorgang werden zyklisch wiederholt, wobei eine Folge von Nullen und Einsen erzeugt wird. Die Periode Δ*t* des Lade-/Entladezyklus bzw. der Folge von Nullen und Einsen ist aufgrund der Druckabhängigkeit der Kapazität des Kondensators eine Funktion des Drucks. Alternativ oder zusätzlich zu einem digitalen Ausgangssignal kann die integrierte Schaltung auch ein analoges Ausgangssignal erzeugen.

Alternativ weist die integrierte Schaltung des kapazitiven Drucksensors einen Resonator auf, in den der die Membran umfassende Kondensator als die Eigenfrequenz bestimmendes Bauelement integriert ist. In diesem Fall kann der Drucksensor ferner einen Wandler aufweisen, der die durch den Druck beeinflußte Resonanzfrequenz des Oszillators in ein analoges oder digitales Signal wandelt.

In dem oben erwähnten Fall des Drucksensor mit einem piezoelektrischen mechanisch-elektrischen Wandler, ist die integrierte Schaltung vorzugsweise zur Verstärkung, Impedanzwandlung oder Digitalisierung des Ausgangssignales des piezoelektrischen Sensors vorgesehen. Vorzugsweise weist die integrierte Schaltung ferner einen analogen oder digitalen Speicher zum Speichern von einem oder mehreren Kalibrierkoeffizienten auf, mit deren Hilfe sie ein kalibriertes Ausgangssignal des Drucksensors erzeugt.

Gegenüber der Oberfläche 20 des Wafers 10 ist eine Nadelkarte 30 mit einer Mehrzahl von Nadeln angeordnet. Die laterale Anordnung der Nadeln bzw. der Nadelspitzen entspricht der lateralen Anordnung der Kontaktflächen eines Drucksensors. Bei einer entsprechenden relativen räumlichen Anordnung des Wafers 10 und der Nadelkarte 30 kontaktieren die Nadeln der Nadelkarte 30 die Kontaktflächen von einem der Drucksensoren des Wafers 10, so daß über die Nadeln dem Drucksensor eine elektrische Leistung oder ein elektrisches Signal zugeführt und ein von dem Drucksensor erzeugtes oder beeinflußtes elektrisches Signal abgegriffen werden können.

Die Nadelkarte 30 weist eine Öffnung 32 auf, unter der die Spitzen der nicht dargestellten Nadeln angeordnet sind. Über der Öffnung 32 ist ein Deckel 34 angeordnet, der mit der Nadelkarte 30 druckdicht verbunden ist. Zwischen der Nadelkarte 30 und der Oberfläche 20 des Wafers 10 ist eine Dichtlippe 36 angeordnet, die in lateraler Richtung die Öffnung 32 und die Nadeln bzw. deren Spitzen beispielsweise in Form eines Kreises oder eines Rechteckes umschließt. Bei einer relativen räumlichen Anordnung der Nadelkarte 30 und des Wafers 10, bei der die Nadeln der Nadelkarte 30 die Kontaktflächen eines Drucksensors an der Oberfläche 20 des Wafers 10 kontaktieren, bildet die Dichtlippe 36 eine druckdichte Verbindung der Nadelkarte 30 mit der Oberfläche 20 des Wafers 10, so daß ein gegenüber der Umwelt druckdicht abgeschlossener Hohlraum 38 zwischen dem Deckel 34, der Nadelkarte 30, der Dichtlippe 36 und der Oberfläche 20 des Wafers 10 entsteht. In diesem Hohlraum 38 ist insbesondere der druckempfindliche Abschnitt des Drucksensors angeordnet.

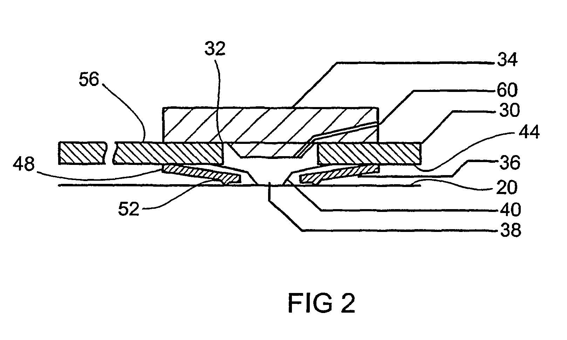

Bevor auf die weiteren in Fig. 1 dargestellten Strukturen und Funktionselemente eingegangen wird, werden zunächst anhand der Fig. 2, 3A, 3B, 4A und 4B der Hohlraum 38, die Dichtlippe 36 und der Deckel 34 näher dargestellt. Fig. 2 stellt eine Vergrößerung eines Ausschnittes aus Fig. 1 dar, in der der Hohlraum 38 im Querschnitt gezeigt ist, der entsteht, wenn durch eine entsprechende relative räumliche Anordnung der Nadelkarte 30 und des Wafers 10 bzw. seiner Oberfläche 20 Nadeln 40 der Nadelkarte 30 auf nicht dargestellte Kontaktflächen des Drucksensors an der Oberfläche 20 des Wafers 10 aufsetzen und dieselben kontaktieren. An der Unterseite 44 der Nadelkarte 30 ist die Dichtlippe 36, beispielsweise eine weiche Silikonlippe, angeordnet, deren äußerer Rand 48 beispielsweise durch eine Klebung, mit der Unterseite 44 der Nadelkarte 30 druckdicht verbunden ist.

Die Dichtlippe 36 weist näherungsweise die Form einer Mantelfläche eines stumpfen flachen Kegels oder einer stumpfen flachen Pyramide auf. Nahe ihrem inneren Rand 50 weist die Dichtlippe 36 eine umlaufende, zu der Oberfläche 20 des Wafers 10 gerichtete Kante 52 auf, die auf die Oberfläche 20 aufsetzt und eine druckdichte Verbindung mit dieser bildet.

An einer Oberseite 56 der Nadelkarte 30 ist der Deckel 34 angeordnet und, beispielsweise mittels einer Klebung, mit der Nadelkarte 30 verbunden, so daß er die Öffnung 32 der Nadelkarte 30 druckdicht verschließt. Eine Bohrung bzw. ein Entlüftungskanal 60 verbindet die Miniaturdruckkammer bzw. Vakuumkammer bzw. den Hohlraum 38 zwischen dem Deckel 34, der Nadelkarte 30, der Dichtlippe 36 und der Oberfläche 20 des Wafers 10 mit einem weiter unten anhand der Fig. 1 dargestellten Drucksystem zur Einstellung eines vorbestimmten Drucks in dem Hohlraum 38.

Wie aus Fig. 2 zu erkennen ist, werden Konstruktion und Anfertigung der Dichtlippe 36 aus geometrischen Gründen vereinfacht, wenn die Nadeln 40 einen möglichst großen Winkel zu der Unterseite 44 der Nadelkarte 30 aufweisen. Ein bevorzugter Wert des Winkels zwischen den Nadeln 40 und der Unterseite 44 der Nadelkarte 30, bei dem die vorliegende Erfindung erfolgreich getestet wurde, beträgt 10 Grad.

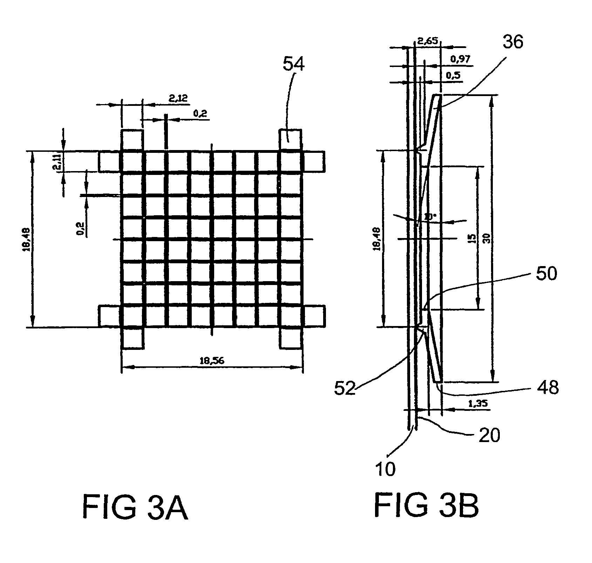

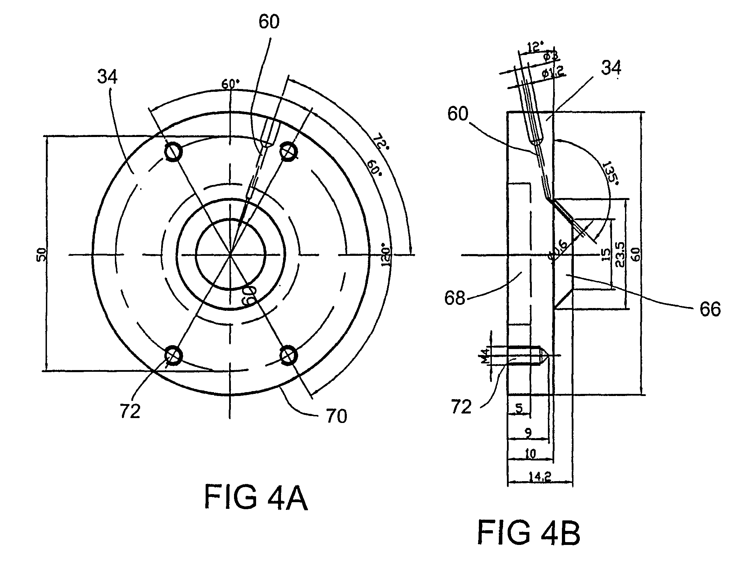

Fig. 3A ist eine schematische Draufsicht auf eine Mehrzahl von Drucksensoren an einer Oberfläche 20 eines Wafers 10, bei deren Herstellung die vorliegende Erfindung verwendbar ist. In Fig. 3A sind wie auch in den folgenden Fig. 3B, 4A und 4B einige typische Abmessungen angegeben, die jedoch nur beispielhaft angegeben sind. Die einzelnen Drucksensoren 54 weisen eine Länge von 2,12 mm und eine Breite von 2,11 mm auf und sind in einem näherungsweise quadratischen Raster mit einem gegenseitigen Abstand von 0,2 mm an der Oberfläche 20 des Wafers 10 angeordnet. Jeder Drucksensor 54 weist einen druckempfindlichen Abschnitt, Kontaktflächen zur elektrischen Kontaktierung und vorzugsweise eine integrierte Schaltung auf.

Fig. 3B ist eine schematische Darstellung der Dichtlippe 36 in einem Schnitt senkrecht zur Oberfläche 20 des Wafers 10. Bei diesem Ausführungsbeispiel ist die Dichtlippe 36 dafür vorgesehen 64 der in Fig. 3A dargestellten Drucksensoren 54 zu umschließen. Wenn die Nadelkarte 30 Nadeln 40 zum simultanen Kontaktieren aller Kontaktflächen von allen 64 Drucksensoren 54, die von der Dichtlippe 36 lateral umschlossen werden, aufweist, können diese 64 Drucksensoren gleichzeitig getestet oder kalibriert werden.

Der äußere Rand 48 der Dichtlippe 36 weist lateral vorzugsweise die Form eines Kreises mit einem Durchmesser von 30 mm auf, der innere Rand 50 der Dichtlippe 36 weist lateral vorzugsweise die Form eines Kreises mit einem Durchmesser von 15 mm auf. Etwas außerhalb des inneren Randes 50 weist die Dichtlippe 36 eine Kante 52 auf, die lateral näherungsweise die Form eines Quadrats mit Seitenlängen von 18,48 mm und 18,56 mm aufweist und damit, wie oben beschrieben, genau 64 Drucksensoren umschließt. Die Kante 52 steht vertikal gegenüber dem inneren Rand 50 um 0,5 mm über. Der Winkel, um den die Dichtlippe 36 von einer Ebene abweicht, beträgt 10°.

Die Fig. 4A und 4B zeigen in einer schematischen Draufsicht bzw. einer schematischen Schnittdarstellung den Deckel 34. Fig. 4B zeigt dabei einen Schnitt senkrecht zu der Oberfläche 20 des Wafers 10. Der Deckel 34 ist im wesentlichen achsensymmetrisch. Sein Außendruchmesser beträgt 60 mm. In der Mitte der der Nadelkarte 30 zugewandten Oberfläche 64 weist der Deckel 34 eine Nase bzw. einen Vorsprung 66 auf, der in die Öffnung 32 der Nadelkarte 30 ragt. Dieser Vorsprung 66 verringert das Volumen des Hohlraumes 38, wodurch die Einstellung eines vorbestimmten Druckes in dem Hohlraum 38 beschleunigt wird. Abgesehen von dem Vorsprung 66 weist der Deckel 34 die Form einer Kreisscheibe mit zwei planparallelen Oberflächen, einer Dicke von 10 mm und einer kreisförmigen 5 mm tiefen Ausnehmung 68 gegenüber dem Vorsprung 66 auf.

Der Deckel 34 weist ferner die Bohrung bzw. den Entlüftungskanal 60 auf, über den ein Druckausgleich zwischen dem Hohlraum 38 und dem weiter unten anhand der Fig. 1 beschriebenen Drucksystem erfolgt. Der Entlüftungskanal 60 endet im Bereich des Vorsprungs 66.

Ferner ist erkennbar, daß der Deckel 34 nahe seines äußeren Umfanges 70 Befestigungsbohrungen 72 mit oder ohne eingeschnittenem Gewinde zur mechanischen Befestigung des Dekkels 34 an einer speziellen Vorrichtung zur mechanischen Stabilisierung aufweist. Diese Vorrichtung zur mechanischen Stabilisierung ist erforderlich, da andernfalls bereits ein geringer Unter- oder Überdruck in dem Hohlraum 38 eine Verformung bzw. Durchbiegung der Nadelkarte bewirkt, die meist aus einer FR4-Platine besteht. Ein Unterdruck bewirkt eine Verringerung des Abstandes zwischen Nadelkarte und Wafer. Diese Verringerung des Abstandes bewirkt, daß die Spitzen der Nadeln auf der Oberfläche 20 des Wafers 10 so weit verschoben werden, daß sie die Kontaktflächen verlassen und die umgebenden Bereiche der Chipoberfläche beschädigen. Um dies zu vermeiden werden Nadelkarte 30 und Deckel 34 durch die erwähnte, in den Fig. nicht dargestellte Vorrichtung mechanisch stabilisiert.

Der Deckel 34 ist vorzugsweise aus einem transparenten Material gefertigt, beispielsweise Plexiglas bzw. Acrylglas bzw. PMMA (Polymethylmethacrylat). Für Justagezwecke ist es so möglich, mittels eines Mikroskops oder eines Kameraaufsatzes den zu testenden IC bzw. Drucksensor durch den Dekkel 34 zu betrachten.

Im folgenden wird anhand der Fig. 1 das Drucksystem näher erläutert, mit dem der Hohlraum 38 über den Entlüftungskanal 60 verbunden ist, und mittels dessen vorbestimmte Drükke p1, p2, p3 in dem Hohlraum 38 eingestellt werden. Ein Druckbereitstellungssystem 100 stellt über Druckbehälter 102, 104 zwei verschiedene vorbestimmte Drücke p1, p2 bereit, die gesteuert über weiter unten beschriebene Einrichtungen abwechselnd an den Hohlraum 38 angelegt werden können. Ein Steuer-PC, auf dem eine Steuersoftware bzw. ein Steuerprogramm ausgeführt wird, ist über einen Datenbus 112, beispielsweise einen GPIP-Bus, mit einem Druckkalibrator 120 verbunden. Der Druckkalibrator 120 ist über Vakuumleitungen 122, 124 mit einer Referenzvakuumpumpe 126 und einer Vakuumpumpe 128 verbunden. Gesteuert durch den Steuer-PC 110 erzeugt der Druckkalibrator 120 abwechselnd die beiden Drücke p1, p2, die an den Hohlraum 38 und damit an den druckempfindlichen Abschnitt des zu testenden oder zu kalibrierenden Drucksensors angelegt werden sollen.

Der Steuer-PC 110 ist ferner über einen Datenbus 132, der vorzugsweise wiederum ein GPIP-Bus ist, mit einer Spannungsquelle 134 zur Erzeugung von zwei Spannungen verbunden. Diese beiden Spannungen werden über Steuerleitungen 142, 144 an Magnet-Steuerventile Va 152 und Vb 154 angelegt, um diese zu öffnen und zu schließen. Die Magnet-Steuerventile Va 152 und Vb 154 sind druckeingangsseitig über eine gegabelte Vakuumleitung 156 mit dem Druckkalibrator 120 verbunden. Druckausgangsseitig sind das Magnet-Steuerventil Va 152 über eine Vakuumleitung 162 mit dem ersten Druckbehälter 102 verbunden und das Magnet-Steuerventil Vb 154 über eine Vakuumleitung 164 mit dem zweiten Druckbehälter 104 verbunden.

Das Druckbereitstellungssystem 100 stellt als in sich geschlossenes System unabhängig von weiter unten beschriebenen weiteren Komponenten des Drucksystems in den Druckbehältern 102, 104 zwei vorbestimmte Drücke p1, p2 bereit. Dazu steuert der Steuer-PC bzw. das auf ihm ablaufende Steuerprogramm über die Datenbusse 112, 132 und die Spannungsquelle 134 den Druckkalibrator 120 und die Magnet-Steuerventile Va 152 und Vb 154. Abwechselnd erzeugt der Druckkalibrator 120 den im ersten Druckbehälter 102 bereitzustellenden ersten vorbestimmten Druck p1, wobei gleichzeitig durch ein offenes Magnet-Steuerventil Va 152 und ein geschlossenes Magnet-Steuerventil Vb 154 nur der erste Druckbehälter 102 mit dem Druckkalibrator 120 verbunden ist, und den im zweiten Druckbehälter 104 bereitzustellenden zweiten vorbestimmten Druck p2, wobei über ein geschlossenes Magnet-Steuerventil Va 152 und ein geöffnetes Magnet-Steuerventil Vb 154 nur der zweite Druckbehälter 104 mit dem Druckkalibrator 120 verbunden ist.

Über Vakuumleitungen 172, 174 sind die Druckbehälter 102, 104 mit je einem Magnet-Steuerventil V1 182 bzw. V2 184 verbunden. Die Magnet-Steuerventile V1 182 und V2 184 sind ferner parallel zu einem Magnet-Steuerventil V3 190 über eine mehrfach gegabelte Vakuumleitung 188 mit einer Druckmeßdose 194 und über den Entlüftungskanal 60 mit dem Hohlraum 38 verbunden. Das Magnet-Steuerventil V3 190 ist ferner mit der umgebenden Atmosphäre verbunden.

Die Magnet-Steuerventile V1 182, V2 184 und V3 190 sind in Fig. 1 als 3-Wege-Ventile dargestellt, die jedoch nur als 2-Wege-Ventile verwendet werden, und deren dritter Zu/Abgang jeweils ständig verschlossen ist. Der Grund für den Einsatz von 3-Wege-Ventilen als 2-Wege-Ventile ist die geringe Auswahl an Pneumatik-Ventilen, die für den Einsatz im Unterdruckbereich geeignet sind.

Ein Mainframe bzw. Großcomputer 200, der das Testen und/oder Kalibrieren der Drucksensoren steuert, ist über eine Schnittstelle 202, vorzugsweise ein TH-MF-Interface, mit einem Testhead bzw. einem Testkopf 204 verbunden. Der Testkopf 204 empfängt über eine Steuerleitung 210 ein Druckmeßsignal von der Druckmeßdose 194 und sendet über Steuerleitungen 212, 214, 216 Steuersignale für die Magnet-Steuerventile V1 182, V2 184 und V3 190. Ein auf dem Großcomputer 200 ablaufendes Testprogramm kann somit über den Testkopf 204 und mittels der Magnet-Steuerventile V1 182, V2 184 und V3 190 den Druck steuern, der in dem Hohlraum 38 und damit am druckempfindlichen Abschnitt des zu testenden oder zu kalibrierenden Drucksensors anliegt.

In einer Ausgangsstellung sind die Ventile V1 182 und V2 184 geschlossen, und das Ventil V3 190 ist geöffnet. In diesem Fall ist das System, insbesondere der Hohlraum 38, belüftet, und es liegt der Umgebungsdruck p3 an. Werden die Magnet-Steuerventile V3 190 und V2 184 geschlossen und das Magnet-Steuerventil V1 182 geöffnet, so existiert eine Fluid-Kommunikation zwischen dem ersten Druckbehälter 102 und dem Hohlraum 38. Im Hohlraum 38 stellt sich der im ersten Druckbehälter bereitgestellte erste vorbestimmte Druck p1 ein. Werden die Magnet-Steuerventile V3 190 und V1 182 geschlossen und das Magnet-Steuerventil V2 184 geöffnet, so existiert eine Fluid-Kommunikation zwischen dem zweiten Druckbehälter 104 und dem Hohlraum 38. Im Hohlraum 38 stellt sich folglich der im zweiten Druckbehälter 104 bereitgestellte zweite vorbestimmte Druck p2 ein. Sobald der Großrechner 200 über den Testkopf 204 ein Druckmeßsignal von der Druckmeßdose 194 empfängt, das anzeigt, daß sich ein der Stellung der Ventile V1 182, V2 184 und V3 190 entsprechender Druck, nämlich einer der vorbestimmten Drücke p1, p2 oder der Umgebungsdruck p3, im Hohlraum 38 eingestellt hat, wird eine Testprogrammroutine gestartet. Mit der Testprogrammroutine werden der Drucksensor und die integrierte Schaltung getestet und die druckanalogen Sensordaten bzw. die digitalen oder analogen Ausgangssignale des Drucksensors, die den durch den Drucksensor erfaßten Druck darstellen, ausgelesen.

Die Kalibration des Drucksensors erfolgt vorzugsweise, wie es durch das oben beschriebene Drucksystem vorgesehen ist, bei mindestens zwei unterschiedlichen Temperaturen T1, T2 und bei mindestens drei unterschiedlichen Drücken p1, p2, p3 je eingestellter Temperatur T1, T2. Aus den so erhaltenen Meßdaten werden anschließend für den zu kalibrierenden Drucksensor individuelle Kalibrierkoeffizienten berechnet und, sofern dies für den Drucksensor vorgesehen ist, in einem integrierten Speicher des Drucksensors abgelegt. Wenn der Drucksensor lediglich getestet wird, wird geprüft, ob die Abweichungen der durch den Drucksensor bestimmten Meßwerte von den jeweils tatsächlichen anliegenden Drücken p1, p2, p3 innerhalb zulässiger Grenzen liegen oder ob ermittelte Kalibrierkoeffizienten innerhalb eines vorbestimmten Bereiches liegen. Drucksensoren, welche diese Bedingungen nicht erfüllen, werden nach einem anschließenden Vereinzeln nicht gehäust sondern verworfen.

Da ein Aufheizen oder Abkühlen des Chucks bzw. Waferträgers 12 und des Wafers 10 relativ langsam erfolgen bzw. relativ lange dauern, werden vorzugsweise zunächst alle Drucksensoren auf einem Wafer bei einer festeingestellten ersten vorbestimmten Temperatur T1 vermessen. Meßdaten, welche die Funktionsfähigkeit der integrierten Schaltung des Drucksensors und die Druck-Meßwerte des Drucksensors für alle drei vorbestimmte Drücke p1, p2, p3 darstellen, werden in einer Datei gespeichert. Anschließend werden der Waferträger 12 und der Wafer 10 bzw. alle Wafer der Horde auf eine zweite Temperatur T2 erwärmt und für alle Drucksensoren, die nicht bereits im ersten Durchgang bei der ersten vorbestimmten Temperatur T1 als defekt erkannt wurden, werden erneut die Druck-Meßsignale bei den drei Drücken p1, p2, p3 erfaßt. In diesem zweiten Durchgang wird jeweils unmittelbar nach Erfassung der Druck-Meßsignale eines Drucksensors durch das Testprogramm eine Kalibrierroutine gestartet. Die Kalibrierroutine ermittelt aus den Meßdaten für die erste vorbestimmte Temperatur T1, die in der Datei gespeichert sind, und den Meßdaten für die zweite vorbestimmte Temperatur T2 individuelle Kalibrierkoeffizienten für den jeweiligen Drucksensor und legt diese gegebenenfalls in einem für die Kalibrierkoeffizienten vorgesehenen Speicher der integrierten Schaltung des Drucksensors ab.

Abhängig von dem physikalischen Meßprinzip des Drucksensors und den Anforderungen, die durch die Anwendung gestellt werden, für die der Drucksensor vorgesehen ist, kann die Kalibration aufgrund von Messungen bei nur einer oder aber bei mehr als zwei Temperaturen sowie bei einem, zwei oder vier oder mehr Drücken erfolgen. Dabei kann die Nadelkarte 30 jeweils nur einen einzelnen Drucksensor oder aber gleichzeitig eine Mehrzahl von Drucksensoren kontaktieren. Sofern die Dichtlippe 36 ebenfalls diese Mehrzahl von gleichzeitig kontaktierten Drucksensoren umschließt, so daß der vorbestimmte Druck p1, p2 oder der Umgebungsdruck p3 gleichzeitig an allen kontaktierten Drucksensoren bzw. deren druckempfindlichen Abschnitten anliegt, können alle kontaktierten Drucksensoren gleichzeitig kalibriert werden.

Sofern die Nadelkarte 30 und die Dichtlippe 36 nicht gleichzeitig alle Drucksensoren des Wafers 10 kontaktieren bzw. umschließen, wird der Wafer 10 nach dem Vermessen, Testen oder Kalibrieren einer Gruppe von Drucksensoren von der Nadelkarte 30 etwas weggefahren, so daß die Nadeln 40 nicht mehr auf den Kontaktflächen der Drucksensoren aufliegen und die Kante 52 der Dichtlippe 36 nicht mehr auf der Oberfläche 20 des Wafers 10 aufliegt. Der Wafer 10 wird dann in lateraler Richtung um eine Strecke verfahren, die dem Rastermaß, mit dem die Drucksensoren an der Oberfläche 20 des Wafers 10 angeordnet sind, oder einem Vielfachen desselben entspricht. Dann wird der Wafer 10 mit dem Waferträger 12 wieder an die Nadelkarte 30 herangefahren, so daß die Nadeln 40 die Kontaktflächen der Drucksensoren an der Oberfläche 20 des Wafers 10 kontaktieren und die Kante 52 der Dichtlippe 36 vollständig an der Oberfläche 20 des Wafers 10 anliegt. Anschließend werden einer oder mehrere Drucksensoren vermessen, getestet oder kalibriert, die noch nicht vermessen, getestet bzw. kalibriert wurden.

Das oben beschriebene Druckbereitstellungssystem 100 ist zur Erzeugung von Unterdrücken bzw. von Drücken, die kleiner als der Umgebungsdruck sind, vorgesehen. Die vorliegende Erfindung ist jedoch auch für Drucksensoren bzw. deren Kalibrierung im Überdruckbereich verwendbar, wobei lediglich dem Druckkalibrator durch einen Kompressor bzw. eine Überdruckpumpe, eine Druckgasflasche oder ähnliches ein entsprechender Druck bereitgestellt werden könnte. Ferner ist ohne weiteres eine Erweiterung des Druckbereitstellungssystems 100 auf mehr als zwei Drücke, die vom Umgebungsdruck abweichen möglich.

Zum Testen oder zum Kalibrieren von Drucksensoren für andere Gase als Luft oder für Flüssigkeiten werden entsprechende Pumpen 126, 128, Ventile 152, 154, 182, 184, 190, Druckbehälter 102, 104, Fluidleitungen 112, 132, 156, 162, 164, 172, 174, 188, 192, eine entsprechende Druckmeßdose 194 und ein entsprechender Druckkalibrator 120 verwendet.

Die Druckmeßdose 194 wird entweder wie in Fig. 1 dargestellt über eine gabelförmige Vakuumleitung 192 mit dem Magnet-Steuerventil V3 190 und dem Hohlraum 38 oder aber über eine separate Vakuumleitung direkt mit dem Hohlraum 38 verbunden oder in diesem angeordnet, wie es bereits anhand der Fig. 4 erläutert wurde.

Bei der in den Fig. 1 und 2 dargestellten Situation umfaßt der Drucksensor einen druckempfindlichen Abschnitt an der Oberfläche 20 des Wafers 10, der zwischen den durch die Kontaktnadeln 40 kontaktierten Kontaktflächen angeordnet ist. Obwohl dies einer gängigen Anordnung von Kontaktflächen an einer integrierten Schaltung bzw. einem Chip entspricht, kann der druckempfindliche Abschnitt jedes Drucksensors auch neben den Kontaktflächen angeordnet sein. In diesem Fall können die Kontaktnadeln 40 der Nadelkarte 30 außerhalb der Dichtlippe 36 angeordnet sein. Abweichend von dem in den Fig. 1 und 2 dargestellten Ausführungsbeispiel kann der Drucksensor einen optischen Signalausgang und/oder einen optischen Leistungseingang aufweisen. In diesem Fall ist neben einer (geringeren) Anzahl von Nadeln 40 bzw. anstatt der Nadeln 40 eine optische Schnittstelle erforderlich, um die Drucksensoren an der Oberfläche 20 des Wafers 10 zu testen.

## Patentansprüche

1. Verfahren zum Testen oder Kalibrieren eines Drucksensors einer Mehrzahl von in einem Wafer (10) ausgebildeten Drucksensoren, wobei der Drucksensor einen drukkempfindlichen Abschnitt und einen Signalausgang aufweist, wobei der Signalausgang Kontaktflächen umfasst, und wobei die Kontaktflächen und der druckempfindliche Abschnitt an einer Oberfläche des Wafers (10) angeordnet sind, mit folgenden Schritten:
Bereitstellen einer Nadelkarte (30), die Nadeln (40) mit Nadelspitzen aufweist, wobei die Nadelkarte (30) eine Oberseite und eine Unterseite aufweist, wobei die Unterseite der Nadelkarte zu der Oberfläche des Wafers hin gerichtet ist, wobei die Nadeln (40) an der Unterseite der Nadelkarte angeordnet sind, und wobei an der Unterseite der Nadelkarte ferner eine Dichtlippe (36) angebracht ist, die die Nadelspitzen umgibt;
druckdichtes Verbinden des druckempfindlichen Abschnitts des Drucksensors mit einer Fluidleitung (60; 192) durch Aufsetzen der Dichtlippe auf die Oberfläche des Wafers, wobei ferner die Nadelspitzen in elektrischen Kontakt mit den Kontaktflächen gebracht werden;
Anlegen eines vorbestimmten Drucks (p1, p2, p3) über die Fluidleitung (60; 192) an den druckempfindlichen Abschnitt des Drucksensors; und
Empfangen eines Signals von dem Signalausgang des Drucksensors durch die Nadeln der Nadelkarte.

2. Verfahren nach Anspruch 1, bei dem der Schritt des Anlegens des vorbestimmten Drucks (p1, p2, p3) vor einem Schritt des Vereinzelns des Wafers (10) ausgeführt wird.

3. Verfahren nach Anspruch 1 oder 2, ferner mit einem Schritt des Befestigens des Wafers (10) an einem Waferträger (12).

4. Verfahren nach einem der Ansprüche 1 bis 3, ferner mit einem Schritt des Entnehmens des Wafers (10) aus einer Horde.

5. Verfahren nach einem der Ansprüche 1 bis 4, ferner mit folgenden Schritten:
Bestimmen eines Kalibrierparameters aus dem vorbestimmten Druck (p1, p2, p3) und dem von dem Signalausgang des Drucksensors empfangenen Signal; und
Speichern des Kalibrierparameters in einer Speichereinrichtung des Drucksensors.

6. Verfahren nach einem der Ansprüche 1 bis 5, ferner mit einem Schritt des Bestimmens, ob der Drucksensor funktionsfähig ist, abhängig von dem von dem Signalausgang des Drucksensors empfangenen Signal.

7. Verfahren nach einem der Ansprüche 1 bis 6, ferner mit folgenden Schritten:
Trennen des druckempfindlichen Abschnitts des Drucksensors von der Fluidleitung (60; 192);
Verfahren des Wafers (10) und der Fluidleitung (60; 192) relativ zueinander um eine vorbestimmte Strecke parallel zu dem Wafer (10);
druckdichtes Verbinden eines druckempfindlichen Abschnitts eines weiteren Drucksensors der Mehrzahl von in dem Wafer ausgebildeten Drucksensoren mit der Fluidleitung (60; 192);
Anlegen des vorbestimmten Drucks (p1, p2, p3) über die Fluidleitung (60; 192) an den druckempfindlichen Abschnitt des weiteren Drucksensors; und
Empfangen eines weiteren Signals von einem Signalausgang des weiteren Drucksensors.

8. Verfahren nach einem der Ansprüche 1 bis 7, ferner mit folgenden Schritten:
Einstellen einer Temperatur des Drucksensors auf einen ersten Wert (T1) vor dem Empfangen des Signals;
Einstellen der Temperatur des Drucksensors auf einen zweiten Wert (T2) nach dem Empfangen des Signals;
Anlegen des vorbestimmten Drucks (p1, p2, p3) über die Fluidleitung (60; 192) an den druckempfindlichen Abschnitt des Drucksensors nach dem Einstellen der Temperatur des Drucksensors auf den zweiten Wert (T2); und
Empfangen eines weiteren Signals von dem Signalausgang des Drucksensors.

9. Verfahren nach Anspruch 8, bei dem die Schritte des Einstellens der Temperatur jeweils einen Schritt des Einstellens einer Temperatur eines Waferträgers umfassen.

10. Verfahren nach einem der Ansprüche 1 bis 9, ferner mit einem Schritt des Kontaktierens des Signalausgangs des Drucksensors mit einer Nadelkarte (30).

11. Verfahren nach Anspruch 1, bei dem sich die Nadeln von der Nadelkarte so erstrecken, dass die Nadeln mit der Unterseite der Nadelkarte einen spitzen Winkel bilden.

12. Verfahren zum Herstellen eines Drucksensorbauelements, mit folgenden Schritten:
Bereitstellen eines Wafers (10) mit einer Mehrzahl von Drucksensoren, wobei jeder Drucksensor einen druckempfindlichen Abschnitt und einen Signalausgang aufweist;
Anwenden eines Verfahren nach einem der Ansprüche 1 bis 11 auf einen der Mehrzahl von Drucksensoren;
Vereinzeln des Wafers nach dem Anwenden des Verfahrens nach einem der Ansprüche 1 bis 11, um den vereinzelten Drucksensor zu erhalten; und
Häusen des vereinzelten Drucksensors, um das Drucksensorelement zu erhalten.

13. Verfahren nach Anspruch 12 in Rückbezug auf Anspruch 6, bei dem der Schritt des Häusens nur ausgeführt wird, wenn der Drucksensor funktionsfähig ist.

14. Vorrichtung zum Anlegen eines vorbestimmten Drucks an einen Drucksensor einer Mehrzahl von in einem Wafer ausgebildeten Drucksensoren und zum Empfangen eines Signals von einem Signalausgang, der Kontaktflächen aufweist, des Drucksensors, wobei der Drucksensor einen druckempfindlichen Abschnitt aufweist, und wobei die Kontaktflächen und der druckempfindliche Abschnitt auf einer Oberfläche des Wafers angeordnet sind, mit folgenden Merkmalen:
einer Einrichtung zum Bereitstellen einer Nadelkarte (30), die Nadeln (40) mit Nadelspitzen aufweist, wobei die Nadelkarte (30) eine Oberseite und eine Unterseite aufweist, wobei die Unterseite der Nadelkarte zu der Oberfläche des Wafers hin gerichtet ist, wobei die Nadeln (40) an der Unterseite der Nadelkarte angeordnet sind, und wobei an der Unterseite der Nadelkarte ferner eine Dichtlippe (36) angebracht ist, die die Nadelspitzen umgibt;
einer Einrichtung (36) zum druckdichten Verbinden des druckempfindlichen Abschnitts mit einer Fluidleitung (60, 192), die zum Zuführen des vorbestimmten Drucks (p1, p2, p3) vorgesehen ist durch Aufsetzen der Dichtlippe auf die Oberfläche des Wafers, wobei ferner die Nadelspitzen in elektrischen Kontakt mit den Kontaktflächen gebracht werden; und
einer Einrichtung (30, 40) zum Empfangen des Signals von dem Signalausgang des Drucksensors durch die Nadeln der Nadelkarte.

15. Vorrichtung nach Anspruch 14, bei der die Einrichtung zum Empfangen ein Wafertester ist.

16. Vorrichtung nach Anspruch 14, bei der die Dichtlippe (36) ferner die Nadeln (40) der Nadelkarte (30) umschließt.

17. Vorrichtung nach Anspruch 18, bei der die Nadelkarte (30) ferner einen Deckel (34) aufweist, der eine Öffnung der Nadelkarte (30) an der Oberseite (56) der Nadelkarte druckdicht abschließt.

18. Vorrichtung nach Anspruch 17, bei der der Deckel (34) ein transparentes Material aufweist.

19. Nadelkarte zum Testen oder Kalibrieren eines Drucksensors einer Mehrzahl von in einem Wafer (10) ausgebildeten Drucksensoren, wobei der Drucksensor einen druckempfindlichen Abschnitt und einen Signalausgang aufweist, wobei der Signalausgang Kontaktflächen umfasst, und wobei die Kontaktflächen und der druckempfindliche Abschnitt an einer Oberfläche des Wafers (10) angeordnet sind, mit folgenden Merkmalen:
einem Nadelkartenkörper mit einer Oberseite und einer Unterseite, wobei die Unterseite der Nadelkarte zu der Oberfläche des Wafers hin zu richten ist, wenn der Drucksensor getestet oder kalibriert wird;
Nadeln (40) mit Nadelspitzen, die an der Unterseite der Nadelkarte angeordnet sind, und
einer Dichtlippe (36), die an der Unterseite der Nadelkarte so angebracht ist, dass sie die Nadelspitzen umgibt.

## Claims

1. A method for testing or calibrating a pressure sensor of a plurality of pressure sensors formed in a wafer (10), wherein the pressure sensor comprises a pressure-sensitive portion and a signal output, wherein the signal output includes pads, and wherein the pads and the pressure-sensitive portion are arranged on a surface of the wafer (10), comprising the following steps:
providing a probe card (30) comprising probes (40) with probe tips, wherein the probe card (30) has an upper side and a lower side, wherein the lower side of the probe card is directed towards the surface of the wafer, wherein the probes (40) are arranged on the lower side of the probe card, and wherein a sealing lip (36) surrounding the probe tips is further attached on the lower side of the probe card;
connecting the pressure-sensitive portion of the pressure sensor to the fluid line (60; 192) in a pressure-tight way by contacting the sealing lip with the surface of the wafer, wherein the probe tips are further electrically connected to the pads;
applying a predetermined pressure (p1, p2, p3) to the pressure-sensitive portion of the pressure sensor via the fluid line (60; 192); and
receiving a signal from the signal output of the pressure sensor via the probes of the probe card.

2. The method according to claim 1, wherein the step of applying the predetermined pressure (p1, p2, p3) is performed before a step of dicing the wafer (10).

3. The method according to claim 1 or 2, further comprising a step of fixing the wafer (10) on a wafer carrier (12).

4. The method according to one of claims 1 to 3, further comprising a step of taking the wafer (10) from a rack.

5. The method according to one of claims 1 to 4, further comprising the following steps:
determining a calibration parameter from the predetermined pressure (p1, p2, p3) and from the signal received by the signal output of the pressure sensor; and
storing the calibration parameter in storage means of the pressure sensor.

6. The method according to one of claims 1 to 5, further comprising a step of determining whether the pressure sensor is functional, depending on the signal received by the signal output of the pressure sensor.

7. The method according to one of claims 1 to 6, further comprising the following steps:
separating the pressure-sensitive portion of the pressure sensor from the fluid line (60; 192);
moving the wafer (10) and the fluid line (60; 192) relative to each other by a predetermined distance parallel to the wafer (10);
connecting a pressure-sensitive portion of another pressure sensor of the plurality of pressure sensors formed in the wafer to the fluid line (60; 192) in a pressure-tight way;
applying the predetermined pressure (p1, p2, p3) to the pressure-sensitive portion of the further pressure sensor via the fluid line (60; 192); and
receiving another signal from a signal output of the further pressure sensor.

8. The method according to one of claims 1 to 7, further comprising the following steps:
setting a temperature of the pressure sensor to a first value (T1) before receiving the signal;
setting the temperature of the pressure sensor to a second value (T2) after receiving the signal;
applying the predetermined pressure (p1, p2, p3) to the pressure-sensitive portion of the pressure sensor via the fluid line (60; 192) after setting the temperature of the pressure sensor to the second value (T2); and
receiving another signal from the signal output of the pressure sensor.

9. The method according to claim 8, wherein the steps of setting the temperature include a respective step of setting a temperature of a wafer carrier.

10. The method according to one of claims 1 to 9, further comprising a step of contacting the signal output of the pressure sensor with a probe card (30).

11. The method according to claim 1, wherein the probes of the probe card extend such that the probes form an acute angle with the lower side of the probe card.

12. A method for manufacturing a pressure sensor element, comprising the following steps:
providing a wafer (10) having a plurality of pressure sensors, wherein each pressure sensor has a pressure-sensitive portion and a signal output;
applying a method according to one of claims 1 to 11 to one of the plurality of pressure sensors;
dicing the wafer after applying the method according to one of claims 1 to 11 to obtain the diced pressure sensor; and
housing the diced pressure sensor to obtain the pressure sensor element.

13. The method according to claim 12 when referring back to claim 6, wherein the step of housing is only performed when the pressure sensor is functional.

14. A device for applying a certain pressure to a pressure sensor of a plurality of pressure sensors formed in a wafer and for receiving a signal from a signal output, having pads, of the pressure sensor, wherein the pressure sensor has a pressure-sensitive portion, and wherein the pads and the pressure-sensitive portion are arranged on a surface of the wafer, comprising:
means for providing a probe card (30) comprising probes (40) with probe tips, wherein the probe card (30) has an upper side and a lower side, wherein the lower side of the probe card is directed towards the surface of the wafer, wherein the probes (40) are arranged on the lower side of the probe card, and wherein a sealing lip (36) surrounding the probe tips is further arranged on the lower side of the probe card;
means (36) for connecting the pressure-sensitive portion to the fluid line (60, 192) provided for supplying the predetermined pressure (p1, p2, p3) in a pressure-tight way by contacting the sealing lip with the surface of the wafer, wherein the probe tips are further electrically connected to the pads; and
means (30, 40) for receiving the signal from the signal output of the pressure sensor via the probes of the probe card.

15. The device according to claim 14, wherein the means for receiving is a wafer tester.

16. The device according to claim 14, wherein the sealing lip (36) further surrounds probes (40) of the probe card (30).

17. The device according to claim 16, wherein the sealing lip (36) further comprises a cap (34) closing an opening of the probe card (30) on the upper side (56) of the probe card in a pressure-tight way.

18. The device according to claim 17, wherein the cap (34) comprises a transparent material.

19. A probe card for testing or calibrating a pressure sensor of a plurality of pressure sensors formed in a wafer (10), wherein the pressure sensor comprises a pressure-sensitive portion and a signal output, wherein the signal output includes pads, and wherein the pads and the pressure-sensitive portion are arranged on a surface of the wafer (10), comprising:
a probe card body having an upper side and a lower side, wherein the lower side of the probe card is to be directed towards the upper side of the wafer when the pressure sensor is tested of calibrated;
probes (40) with probe tips arranged on the lower side of the probe card; and
a sealing lip (36) attached to the lower side of the probe card such that it surrounds the probe tips.

## Revendications

1. Procédé pour tester ou étalonner un capteur de pression parmi une pluralité de capteurs de pression réalisés dans une tranche de silicium (10), le capteur de pression présentant un segment sensible à la pression et une sortie de signal, la sortie de signal comportant des faces de contact, et les faces de contact et le segment sensible à la pression étant disposés sur une surface de la tranche de silicium (10), aux étapes suivantes consistant à:
préparer une carte à aiguilles (30) qui présente des aiguilles (40) avec des pointes d'aiguille, la carte à aiguilles (30) présentant une face supérieure et une face inférieure, la face inférieure de la carte à aiguilles étant orientée vers la surface de la tranche de silicium, les aiguilles (40) étant disposées sur la face inférieure de la carte à aiguilles, et sur la face inférieure de la carte à aiguilles étant par ailleurs placée une lèvre d'étanchéité (36) qui entoure les pointes d'aiguille;
assembler de manière étanche à la pression le segment sensible à la pression du capteur de pression avec un conduit à fluide (60; 192) en plaçant la lèvre d'étanchéité sur la surface de la tranche de silicium, les pointes d'aiguille étant par ailleurs amenées en contact électrique avec les faces de contact;
appliquer une pression prédéterminée (p1, p2, p3) sur le conduit à fluide (60; 192) au segment sensible à la pression du capteur de pression; et
recevoir un signal de la sortie de signal du capteur de pression par les aiguilles de la carte à aiguilles.

2. Procédé selon la revendication 1, dans lequel l'étape consistant à appliquer la pression prédéterminée (p1, p2, p3) est réalisée avant une étape consistant à individualiser la tranche de silicium (10).

3. Procédé selon la revendication 1 ou 2, comprenant par ailleurs une étape consistant à fixer la tranche de silicium (10) à un porte-tranche de silicium (12).

4. Procédé selon l'une des revendications 1 à 3, comprenant par ailleurs une étape consistant à prélever la tranche de silicium (10) d'une claie.

5. Procédé selon l'une des revendications 1 à 4, comprenant par ailleurs les étapes suivantes consistant à:
déterminer un paramètre d'étalonnage à partir de la pression déterminée (p1, p2, p3) et du signal reçu de la sortie de signal du capteur de pression; et
mémoriser le paramètre d'étalonnage dans un moyen de mémoire du capteur de pression.

6. Procédé selon l'une des revendications 1 à 5, comprenant par ailleurs une étape consistant à déterminer si le capteur de pression est fonctionnel, en fonction du signal reçu de la sortie de signal du capteur de pression.

7. Procédé selon l'une des revendications 1 à 6, comprenant par ailleurs les étapes suivantes consistant à:
individualiser le segment sensible à la pression du capteur de pression du conduit à fluide (60; 192);
déplacer la tranche de silicium (10) et le conduit à fluide (60; 192) l'un par rapport à l'autre d'un trajet prédéterminé parallèle à la tranche de silicium (10);
assembler de manière étanche à la pression un segment sensible à la pression d'un autre capteur de pression de la pluralité de capteurs de pression réalisés dans la tranche de silicium avec le conduit à fluide (60; 192);
appliquer la pression prédéterminée (p1, p2, p3) sur le conduit à fluide (60; 192) au segment sensible à la pression de l'autre capteur de pression; et
recevoir un autre signal d'une sortie de signal de l'autre capteur de pression.

8. Procédé selon l'une des revendications 1 à 7, comprenant par ailleurs les étapes suivantes consistant à:
régler une température du capteur de pression à une première valeur (T1) avant la réception du signal;
régler la température du capteur de pression à une deuxième valeur (T2) après la réception du signal;
appliquer la pression prédéterminée (p1, p2, p3) sur le conduit à fluide (60; 192) au segment sensible à la pression du capteur de pression après le réglage de la température du capteur de pression à la deuxième valeur (T2); et
recevoir un autre signal de la sortie de signal du capteur de pression.

9. Procédé selon la revendication 8, dans lequel les étapes consistant à régler la température comportent, chacune, une étape consistant à régler une température d'un porte-tranche de silicium.

10. Procédé selon l'une des revendications 1 à 9, comprenant par ailleurs une étape consistant à mettre en contact la sortie de signal du capteur de pression avec une carte à aiguilles (30).

11. Procédé selon la revendication 1, dans lequel les aiguilles s'étendent à partir de la carte à aiguilles de sorte que les aiguilles forment avec la face inférieure de la carte à aiguilles un angle aigu.

12. Procédé pour fabriquer un élément de capteur de pression, aux étapes suivantes consistant à:
préparer une tranche de silicium (10) avec une pluralité de capteurs de pression, chaque capteur de pression présentant un segment sensible à la pression et une sortie de signal;
appliquer un procédé selon l'une des revendications 1 à 11 sur l'un de la pluralité de capteurs de pression;
individualiser la tranche de silicium après l'application du procédé selon l'une des revendications 1 à 11, pour obtenir le capteur de pression individualisé; et
mettre sous boîtier le capteur de pression individualisé, pour obtenir l'élément de capteur de pression.

13. Procédé selon la revendication 12 avec renvoi à la revendication 6, dans lequel l'étape consistant à mettre sous boîtier n'est réalisée que si le capteur de pression est fonctionnel.

14. Dispositif pour appliquer une pression prédéterminée sur un capteur de pression d'une pluralité de capteurs de pression réalisés dans une tranche de silicium et pour recevoir un signal d'une sortie de signal, présentant des faces de contact, du capteur de pression, le capteur de pression présentant un segment sensible à la pression, et les faces de contact et le segment sensible à la pression étant disposés sur une surface de la tranche de silicium, aux caractéristiques suivantes:
un moyen destiné à préparer une carte à aiguilles (30) qui présente des aiguilles (40) avec des pointes d'aiguille, la carte à aiguilles (30) présentant une face supérieure et une face inférieure, la face inférieure de la carte à aiguilles étant orientée vers la surface de la tranche de silicium, les aiguilles (40) étant disposées sur la face inférieure de la carte à aiguilles, et sur la face inférieure de la carte à aiguilles étant par ailleurs placée une lèvre d'étanchéité (36) qui entoure les pointes d'aiguille;
un moyen (36) destiné à assembler de manière étanche à la pression le segment sensible à la pression avec un conduit à fluide (60; 192) qui est prévu pour alimenter la pression prédéterminée (p1, p2, p3) en plaçant la lèvre d'étanchéité sur la surface de la tranche de silicium, les pointes d'aiguille étant par ailleurs amenées en contact électrique avec les faces de contact;
un moyen (30, 40) destiné à recevoir le signal de la sortie de signal du capteur de pression par les aiguilles de la carte à aiguilles.

15. Dispositif selon la revendication 14, dans lequel le moyen destiné à recevoir est un testeur de tranche de silicium.

16. Dispositif selon la revendication 14, dans lequel la lèvre d'étanchéité (36) entoure par ailleurs les aiguilles (40) de la carte à aiguilles (30).

17. Dispositif selon la revendication 18, dans lequel la carte à aiguilles (30) présente par ailleurs un couvercle (34) qui obture de manière étanche à la pression une ouverture de la carte à aiguilles (30) à la face supérieure (56) de la carte à aiguilles.

18. Dispositif selon la revendication 17, dans lequel le couvercle (34) présente un matériau transparent.

19. Carte à aiguilles pour tester ou étalonner un capteur de pression parmi une pluralité de capteurs de pression réalisés dans une tranche de silicium (10), le capteur de pression présentant un segment sensible à la pression et une sortie de signal, la sortie de signal comportant des faces de contact, et les faces de contact et le segment sensible à la pression étant disposés sur une surface de la tranche de silicium (10), aux caractéristiques suivantes:
un corps de carte à aiguilles avec une face supérieure et une face inférieure, la face inférieure de la carte à aiguilles devant être orientée vers la surface de la tranche de silicium lorsque le capteur de pression est testé ou étalonné;
des aiguilles (40) avec des pointes d'aiguille qui sont disposées à la face inférieure de la carte à aiguilles, et
une lèvre d'étanchéité (36) qui est placée sur la face inférieure de la carte à aiguilles de sorte qu'elle entoure les pointes d'aiguille.
